# EUROPÄISCHE PATENTSCHRIFT

(11) **EP 3 439 093 B1**
(45) Veröffentlichungstag und Bekanntmachung des Hinweises auf die Patenterteilung: **15.01.2020**
(21) Anmeldenummer: 17275122.4
(22) Anmeldetag: 04.08.2017
(51) Int. Cl.: H01M 8/18, H01M 4/02, H01M 4/04

(54) **REDOX-FLOW-BATTERIE UND VERFAHREN ZUM BETREIBEN EINER REDOX-FLOW-BATTERIE**
REDOX FLOW BATTERY AND METHOD FOR OPERATING A REDOX FLOW BATTERY
BATTERIE À FLUX REDOX ET PROCÉDÉ DE FONCTIONNEMENT D'UNE BATTERIE À FLUX REDOX

(43) Veröffentlichungstag der Anmeldung: 06.02.2019
(73) Patentinhaber: Siemens Aktiengesellschaft, 80333 München (DE)
(72) Erfinder: Fleck, Robert, 91325 Adelsdorf (DE); Friedl, Jochen, Newcastle Upon Tyne, NE3 3NJ (GB); Schricker, Barbara, 91058 Erlangen (DE); Schwob, Matthäa, Newcastle upon Tyne, NE2 1TN (GB); Stimming, Ulrich, Newcastle upon Tyne, NE15 9JT (GB); Wolfschmidt, Holger, 91058 Erlangen (DE)

(56) Entgegenhaltungen:
- WO-A2-2012/033692
- US-A1- 2011 244 277
- US-A1- 2011 274 988

## Beschreibung

Die Erfindung betrifft eine Redox-Flow-Batterie und ein Verfahren zum Betreiben einer Redox-Flow-Batterie.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Batterien sind Speicher für elektrische Energie auf elektrochemischer Basis und geeignet, die überschüssige Energie zu speichern. Handelt es sich um einen wiederaufladbaren Speicher wird dieser auch Akkumulator genannt. Ein einzelnes wiederaufladbares Speicherelement wird auch Sekundärelement genannt.

Bei Redox-Flow-Batterien ist, im Unterschied zu klassischen Sekundärelementen, das elektrodenaktive Material flüssig. Dieser flüssige Elektrolyt wird in einem Tank gelagert und in einen Kathodenraum mit einer Kathode und/oder in einen Anodenraum mit einer Anode gepumpt. Der flüssige Elektrolyt umfasst als elektrodenaktives Material daher zweckmäßigerweise ein Reduktions-Oxidations-Paar.

An den Elektroden wird das elektrodenaktive Material reduziert oder oxidiert. Die Elektroden umfassen typischerweise Graphit oder Carbon. Die Struktur der Elektroden ist typischerweise porös in Art eines Vlies oder eines Fells, oder in anderen Worten in Form eines Gitters oder Strukturelements, ausgebildet, um eine möglichst große Oberfläche der Elektroden bereitzustellen. Nachteiligerweise findet an diesen Elektroden die Wasserstoffbildungsreaktion (englisch: hydrogen evolution reaction, HER) statt. Dies führt nachteilig dazu, dass zwischen Anolyt und Katholyt ungleiche Ladungsverhältnisse vorliegen. Der Faradaysche Wirkungsgrad wird dadurch nachteilig deutlich verringert.

Es ist daher Aufgabe der vorliegenden Erfindung eine Redox-Flow-Batterie und ein Verfahren zum Betreiben einer Redox-Flow-Batterie anzugeben, welche einen verbesserten Faradayschen Wirkungsgrad aufweist.

Die Aufgabe wird mittels einer elektrisch wiederaufladbaren Redox-Flow-Batterie nach Anspruch 1 und einem Verfahren zum Betreiben einer Redox-Flow-Batterie nach Anspruch 10 gelöst.

Erfindungsgemäß umfasst eine elektrisch wiederaufladbare Redox-Flow-Batterie eine erste Kammer und eine zweite Kammer. Die erste Kammer ist von der zweiten Kammer mittels einer Membran getrennt. Die erste Kammer umfasst eine Kathode und die zweite Kammer umfasst eine Anode. Eine erste planare Oberfläche der Kathode und/oder eine zweite planare Oberfläche der Anode weist Erhebungen zur Vergrößerung der Oberfläche auf. Diese Erhebungen sind geeignet, Flusskanäle für einen Elektrolyten der Redox-Flow Batterie zu bilden. Die Kathode und/oder die Anode umfassen wenigstens ein erstes Material, wobei das Material Blei, oder Bismut, mit einem Gewichtsanteil von wenigstens 20% umfasst.

Das erfindungsgemäße Verfahren zum Betreiben einer Redox-Flow-Batterie umfasst mehrere Schritte. Zunächst erfolgt das Bereitstellen einer Redox-Flow-Batterie mit einer ersten Kammer und einer zweiten Kammer. Die erste Kammer ist von der zweiten Kammer mittels einer Membran getrennt. Die erste Kammer umfasst eine Kathode und die zweite Kammer umfasst eine Anode. Eine erste Oberfläche der Kathode und/oder eine zweite Oberfläche der Anode weist Erhebungen zur Vergrößerung der Oberfläche auf. Diese Erhebungen sind geeignet, Flusskanäle für einen ersten und/oder zweiten Elektrolyten der Redox-Flow Batterie zu bilden. Die Kathode und/oder die Anode umfassen wenigstens ein erstes Material, wobei das erste Material Blei oder Bismut umfasst. Ein erster Elektrolyt wird in die erste Kammer geführt und ein zweiter Elektrolyt wird in die zweite Kammer geführt. In den beiden Kammern erfolgt dann das Aufladen oder Entladen der Redox-Flow-Batterie.

Die Kathode und/oder die Anode sind im Wesentlichen planar. Auf der Kathode und/oder der Anode sind Erhebungen angeordnet. Unter Erhebungen werden hier strukturierte Erhebungen insbesondere in Form von zylinderförmigen, würfelförmigen, pyramidenförmigen oder halbkugelförmigen Erhebungen verstanden. Zwischen den Erhebungen bilden sich Flusskanäle aus, durch die der erste und/oder zweite Elektrolyt fließen kann.

Die erfindungsgemäß verwendeten Materialien Blei oder Bismut weisen ein höheres Überspannungspotential gegenüber der Wasserstoffentwicklung auf als übliche Kohlenstoff- oder Graphit-Elektroden. Insbesondere ist das Überspannungspotential gegenüber Wasserstoff bei 25 °C kleiner als - 0,6 V. Dadurch kann das angelegte elektrische Potential an der Anode negativer sein als mit Kohlenstoff- oder Graphitelektroden, wodurch vorteilhaft mehr Elektronen pro Molekül des Reduktions-Oxidations-Paares von der Anode zur Kathode transferiert werden können. Vorteilhafterweise erhöht sich dadurch die Faraday-Effizienz und somit die gesamte Effizienz der Redox-Flow-Batterie. Der elektrische Strom wird also effizient auf ein Reduktions-Oxidations-Paar im Elektrolyten übertragen, dadurch dass dieser reduziert bzw. oxidiert wird. Die zu dieser Reaktion konkurrierende Wasserstoffbildungsreaktion wird deutlich reduziert. Weiterhin wird ein auseinanderlaufen des ersten Elektrolyten, also des Katholyts, und des zweiten Elektrolyten, also des Anolyts, hinsichtlich des pH-Wertes vermieden.

Insbesondere wenn als Reduktions-Oxidations-Paar Polyoxometallate verwendet werden, schädigt der veränderte pH-Wert aufgrund der Verwendung eines Protons bei der Wasserstoffentwicklung die Polyoxometallate, insbesondere im Anolyt. Vorteilhaft kann die Redox-Flow-Batterie längere Zeit betrieben werden, wenn die Wasserstoffbildungsreaktion vermindert wird, ohne dass der erste und/oder zweite Elektrolyt ausgetauscht werden muss.

Weiterhin ist es vorteilhaft möglich, durch das Verwenden der planaren bzw. flachen Elektroden, den Druckverlust entlang der Elektrode in Flussrichtung der Elektrode zu vermindern. Dies verbessert die Energieeffizienz der Redox-Flow-Batterie vorteilhaft.

In einer vorteilhaften Ausgestaltung und Weiterbildung der Erfindung umfasst die Kathode und/oder Anode als das erste Material Blei oder Bismut. Diese Materialien können mit organischen Reduktions-Oxidations-Paaren auf Chinon-Basis, insbesondere AQDSH₂/AQDS (AQDS bedeutet 9, 10 Anthraquinon-2,7-diSulfonsäure) und Br₂/ 2 HBr, eingesetzt werden. Es ist ebenfalls vorteilhaft möglich, Blei oder Bismut als Elektrodenmaterial mit organischen Reduktions-Oxidations-Paaren auf Polymerbasis einzusetzen, insbesondere Polymere mit der Basis TEMPO/TEMPO+ (TEMPO bedeutet 2,2,6,6-Tetramethylpiperidinyloxyl) und basierend auf Viologenen, in anderen Worten, *N*'-dialkyl-4,4'-Bipyridine (Viol2⁻/Viol⁺). Besonders vorteilhaft sind Blei und Bismut leicht zugänglich und im Vergleich zu anderen Materialien nicht teuer.

In einer weiteren vorteilhaften Ausgestaltung und Weiterbildung der Erfindung weisen die Erhebungen eine erste lange Seite und eine zweite kurze Seite auf. Die Erhebungen sind also im Wesentlichen rechteckig ausgeführt. Dadurch bilden sich zwischen den Erhebungen längliche Flusskanäle, durch die der erste und/oder zweite Elektrolyt fließen kann. Die Erhebungen sind insbesondere parallel oder mäanderförmig angeordnet. Im Falle der parallelen Anordnung entstehen parallele Flusskanäle, wodurch der erste und/oder zweite Elektrolyt durch mehrere einzelne Flusskanäle durch die Redox-Flow Batterie geführt wird. Im Falle der mandelförmig angeordneten Erhebungen und somit auch der mäanderförmigen Flusskanäle ergibt sich ein langer Flusskanal durch die Redox-Flow Batterie.

In der erfindungsgemässen Ausgestaltung und Weiterbildung der Erfindung umfasst das erste Material Blei oder Bismut mit einem Gewichtsanteil von wenigstens 20 %, insbesondere von wenigstens 40 %. Blei oder Bismut sind also nicht nur zu geringen Teilen, insbesondere als Verunreinigung, in den Elektroden enthalten, sondern stellen ein wesentliches Material der Elektroden dar. Vorteilhaft garantiert dies, dass das Überspannungspotential gegenüber Wasserstoff derart niedrig ist, dass kein oder nahezu kein Wasserstoff in der Redox-Flow-Batterie produziert wird.

In einer weiteren vorteilhaften Ausgestaltung und Weiterbildung der Erfindung berühren die Kathode und/oder die Anode die Membran wenigstens teilweise direkt. Dadurch grenzt die Membran, die insbesondere an die Erhebungen angrenzt einen Flusskanal ab. Vorteilhaft wird so die Flussrichtung des ersten und/oder zweiten Elektrolyten in der Redox-Flow-Batterie definiert vorgegeben. Dadurch lässt sich die Kontaktfläche, welche der erste und/oder zweite Elektrolyt mit den Elektroden aufweist, vorteilhaft festlegen.

In einer weiteren vorteilhaften Ausgestaltung und Weiterbildung der Erfindung umfasst die Kathode und/oder die Anode ein zweites Material, wobei das zweite Material Polymerfasern oder Kohlenstofffasern umfasst. Vorteilhaft stabilisieren die Fasern die jeweilige Form der Anode und/oder Kathode. Weiterhin wird, in Abhängigkeit des eingesetzten Elektrodenmaterials, teures Material durch günstigeres Fasermaterial ersetzt. Dies senkt die Herstellungskosten der Elektrode vorteilhaft.

In einer weiteren vorteilhaften Ausgestaltung und Weiterbildung der Erfindung beträgt ein Gewichtsanteil des zweiten Materials wenigstens 10 %, besonders vorteilhaft wenigstens 15 %.

In einer weiteren vorteilhaften Ausgestaltung und Weiterbildung der Erfindung ist das erste Material als eine Schicht auf dem zweiten Material angeordnet. Vorteilhaft werden so die Herstellungskosten möglichst niedrig gehalten, da die Herstellung des zweiten Materials günstiger ist und eine ausreichend dicke Schicht des ersten Materials das geforderte Überspannungspotential gegenüber Wasserstoff aufweist. Bevorzugt liegt die Dicke der Schicht in einem Bereich von 3 µm und 50 µm, besonders bevorzugt in einem Bereich von 5 µm bis 20 µm.

In einer weiteren vorteilhaften Ausgestaltung und Weiterbildung der Erfindung ist die Anode und/oder Kathode als eine Ballelektrode oder eine Stabelektrode ausgestaltet. Diese Formen der Elektroden sind vorteilhaft besonders einfach herstellbar.

In einer vorteilhaften Ausgestaltung und Weiterbildung der Erfindung wird als Reduktions-Oxidations-Paar im ersten und/oder zweiten Elektrolyten Polyoxometallat verwendet.

Weitere Merkmale, Eigenschaften und Vorteile der vorliegenden Erfindung ergeben sich aus der nachfolgenden Beschreibung unter Bezugnahme der beiliegenden Figuren.
- Figur 1: zeigt eine wiederaufladbare Redox-Flow-Batterie mit einer Redox-Flow-Einheit mit planarer Elektrode;
- Figur 2: zeigt eine Redox-Flow-Einheit mit einer Anode mit Flusskanälen umfassend Blei;
- Figur 3: zeigt eine Redox-Flow-Einheit mit einer Anode mit Flusskanälen umfassend zwei Schichten;
- Figur 4: zeigt eine Redox-Flow-Einheit mit einer Kathode mit einer ersten Form von Flusskanälen und einer Anode mit einer zweiten Form von Flusskanälen;
- Figur 5: zeigt eine planare Anode mit mäanderförmig angeordneten Erhebungen;
- Figur 6: zeigt eine planare Anode mit länglichen Erhebungen;
- Figur 7: zeigt eine planare Anode mit halbkugelförmigen Erhebungen;
- Figur 8: zeigt eine planare Anode mit pyramidenförmigen Erhebungen;
- Figur 9: zeigt eine planare Anode mit würfelförmigen Erhebungen.

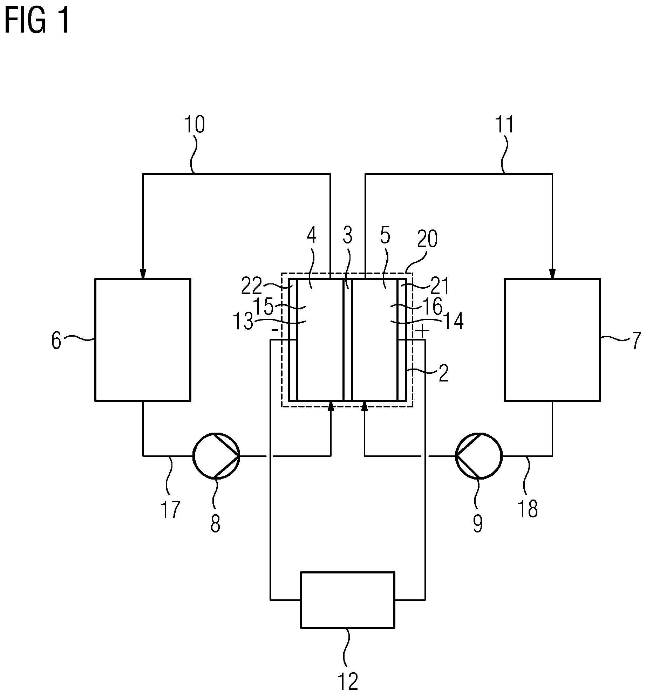

Figur 1 zeigt eine wiederaufladbare Redox-Flow-Batterie 1. Die wiederaufladbare Redox-Flow-Batterie 1 umfasst eine Redox-Flow-Einheit 20. Die Redox-Flow-Einheit 20 umfasst eine Membran 3, wobei die Membran 3 eine erste Kammer 4 und eine zweite Kammer 5 voneinander trennt. In der ersten Kammer 4 ist eine Kathode 15 angeordnet. In der zweiten Kammer 5 ist eine Anode 16 angeordnet. Die Kathode 15 und die Anode 16 sind über eine Elektroenergieanbindung 12 mit einem Stromnetz verbunden. Die wiederaufladbare Redox-Flow-Batterie 1 umfasst weiterhin einen ersten Tank 6, welcher mittels einer ersten Pumpe 8 über eine erste Leitung mit der ersten Kammer 4 mit der Kathode 15 verbunden ist. Die erste Kammer 4 ist wiederum über eine dritte Leitung 10 mit dem ersten Tank 6 verbunden. Die wiederaufladbare Redox-Flow-Batterie 1 umfasst einen zweiten Tank 7 der über eine zweite Pumpe 9 mit der zweiten Kammer 5 mit der Anode 16 über eine zweite Leitung 18 verbunden ist. Die zweite Kammer 5 ist wiederum mit einer vierten Leitung 11 mit dem zweiten Tank 7 verbunden.

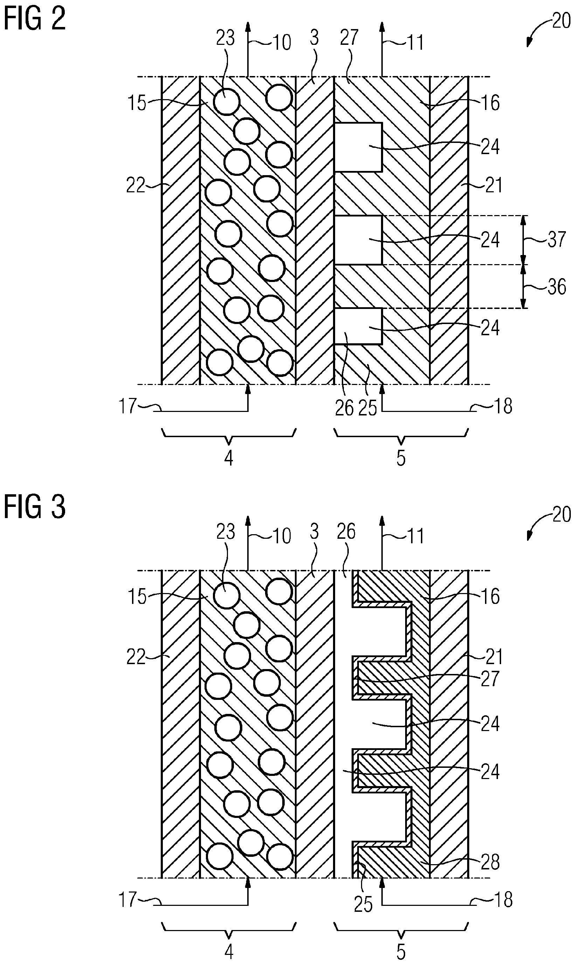

Figur 2 zeigt ein erstes Ausführungsbeispiel einer Redox-Flow-Einheit 20 mit einer ersten Kammer 4, in welcher eine poröse Graphitelektrode, in diesem Fall die Kathode 15, angeordnet ist. Die Redox-Flow-Einheit 20 umfasst weiterhin eine zweite Kammer 5, in welcher eine planare Anode 16 mit länglichen Erhebungen 27 angeordnet ist. Die Kathode 15 grenzt direkt an einen Stromkollektor 22. Die Anode 16 grenzt ebenfalls an einen Stromkollektor 21. Die Graphitelektrode 15 berührt sowohl den Stromkollektor 22 als auch die Membran 3.

Die Anode berührt den Kollektor 21 vollständig und die Membran mittels der Erhebungen 27 teilweise. Zwischen den Erhebungen 27 bilden sich Flusskanäle 26. Der Flusskanal weist eine erste Breite 36 und eine zweite Breite 37 auf. Die zweite Breite 37 nimmt in diesem Ausführungsbeispiel zu. Die erste Breite 36 liegt typischerweise in einem Bereich von 0,5 mm bis 20 mm, bevorzugt von 1 mm bis 10 mm. Die zweite Breite 37 des Flusskanals 24 liegt typischerweise in einem Bereich von 0,05 mm bis 20 mm, besonders bevorzugt von 0,1 mm bis 10 mm. Die erste Breite 36 ist konstant. Es ist alternativ auch möglich, dass die erste und zweite Breite 36, 37 entlang des Flusskanals 26 abnehmen oder bei breiten konstant sind. Die Querschnitte können insbesondere in Abhängigkeit einer gewünschten Ziel-Verweilzeit des Anolyts an der Anode gewählt werden. Die Flusskanäle 26 werden an drei Seiten von der Anode 16 und an einer Seite von der Membran 3 begrenzt. Die planare Anode 16 umfasst ein erstes Material 25, wobei das erste Material in diesem Ausführungsbeispiel wenigstens 10 % Blei umfasst. Die Anode 16 selbst ist nicht porös. Alternativ kann die Anode 16 wenigstens 10 % Bismut umfassen. Die Anode kann weiterhin Kohlenstoff und Carbon umfassen. Auch Legierungen, insbesondere aus Blei oder Bismut können eingesetzt werden.

In die erste Kammer 4 wird ein Elektrolyt als Katholyt 23 zugeführt. Der Katholyt 23 strömt durch die Porenstruktur der Graphitelektrode 15. In die zweite Kammer 5 wird ein Elektrolyt als Anolyt zugeführt. Der Anolyt fließt mäanderförmig durch die Flusskanäle 26 der Anode 16. Die Verweilzeit des Anolyts an der Anode ist zwar gegenüber porösen Elektroden verkürzt, die typischerweise in Redox-Flow Zellen eingesetzten Reduktions-Oxidations-Paare, insbesondere basierend auf Polyoxometallat, können aber auch mit kurzen Verweilzeiten effektiv reduziert bzw. oxidiert werden. Die Verweilzeit kann mithilfe der Form der Flusskanäle 26 verändert werden, sodass die Verweilzeit in Abhängigkeit des eingesetzten Reduktions-Oxidations-Paares angepasst werden kann. Durch das niedrige Überspannungspotential gegenüber Wasserstoff wird die Wasserstoffproduktion an der Anode gegenüber porösen Elektroden vorteilhaft verringert.

Figur 3 zeigt ein zweites Ausführungsbeispiel einer Redox-Flow-Einheit 20 mit einer porösen Graphitelektrode in der ersten Kammer 4 und einer planaren Anode 16 mit Erhebungen 27 in der zweiten Kammer 5. Im Unterschied zum ersten Ausführungsbeispiel aus Figur 2, berührt die Anode lediglich den Stromkollektor 21, nicht aber die Membran 3. Weiterhin umfasst die Anode 16 in diesem zweiten Ausführungsbeispiel zwei Materialien, welche schichtartig übereinander angeordnet sind. Der Grundkörper der Anode 16 umfasst im Wesentlichen das zweite Material 28 und ist mit einer Schicht umfassend das erste Material 25 beschichtet. In diesem Ausführungsbeispiel umfasst das zweite Material 28 Polymerfasern. Alternativ kann das zweite Material auch Kohlenstofffasern umfassen.

In die erste Kammer 4 wird ein Elektrolyt als Katholyt zugeführt. Der Katholyt strömt durch die Porenstruktur der Graphitelektrode. In die zweite Kammer 5 wird ein Elektrolyt als Anolyt zugeführt. Der Anolyt fließt entlang des Flusskanals 26 und dringt dabei auch in die Vertiefungen zwischen den Erhebungen 27 ein. Diese Anordnung eignet sich insbesondere für Reduktions-Oxidations-Paare, welchen eine geringe Verweilzeit an der Anode ausreicht, um einen ausreichenden Oxidationsgrad zum Speichern der Energie zu gewährleisten. Insbesondere eignet sich ein solcher Aufbau, wenn als Reduktions-Oxidations-Paar ein Polyoxometallat eingesetzt wird.

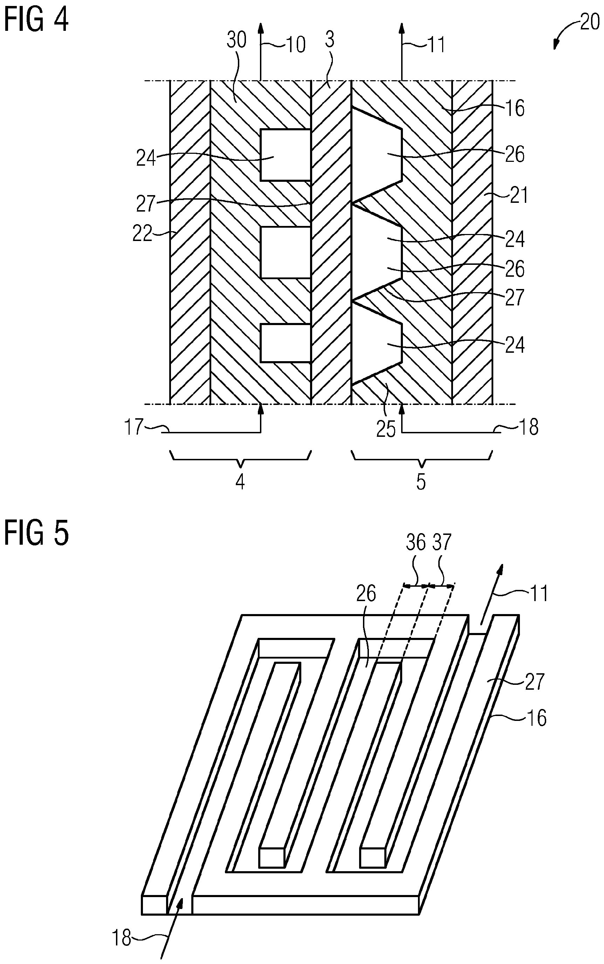

Figur 4 zeigt eine Redox-Flow-Einheit 20 gemäß einem dritten Ausführungsbeispiel. In der ersten Kammer 4 ist eine planare Kathode 30 mit Erhebungen 27 und Flusskanälen 26 angeordnet. In der zweiten Kammer 5 ist eine planare Anode 16 mit Erhebungen 27 angeordnet. Die Erhebungen 27 unterscheiden sich in ihrer Form. Die Kathode 30 weist quaderförmige Erhebungen auf, die Anode 16 weist pyramidenförmige Erhebungen auf. Die Spitzen der Pyramide berühren in diesem Beispiel die Membran 3. Es bilden sich also Flusskanäle 26 aus, durch die der Anolyt fließen kann. Auch der Katholyt fließt in diesem Beispiel mäanderförmig über die Kathode 30.

Die Ausführungsbeispiele können miteinander kombiniert werden. So ist es insbesondere möglich, dass auch die Anode im ersten Ausführungsbeispiel zwei Schichten umfasst. Alle genannten Ausführungen der Anode können ebenso auf die Kathode übertragen werden. Insbesondere kann eine planare Kathode 30 mit Erhebungen 27 in der ersten Kammer 4 und eine poröse Anode in einer Redox-Flow-Einheit 2 angeordnet sein. Weiterhin können die Erhebungen 27 auf der Elektrode in allen drei Ausführungsbeispielen unterschiedliche Formen aufweisen. Die unterschiedlichen Formen werden in den Figuren 5 bis 9 anhand der Anode 16 verdeutlicht. Sie können aber ebenso auf die Kathode 30 übertragen werden.

Figur 5 zeigt Erhebungen 27, wie sie im ersten und zweiten Ausführungsbeispiel bei der Anode 16 und im dritten Ausführungsbeispiel bei der Kathode 30 angeordnet sind. Die Erhebungen bilden einen mäanderförmigen Flusskanal 26.

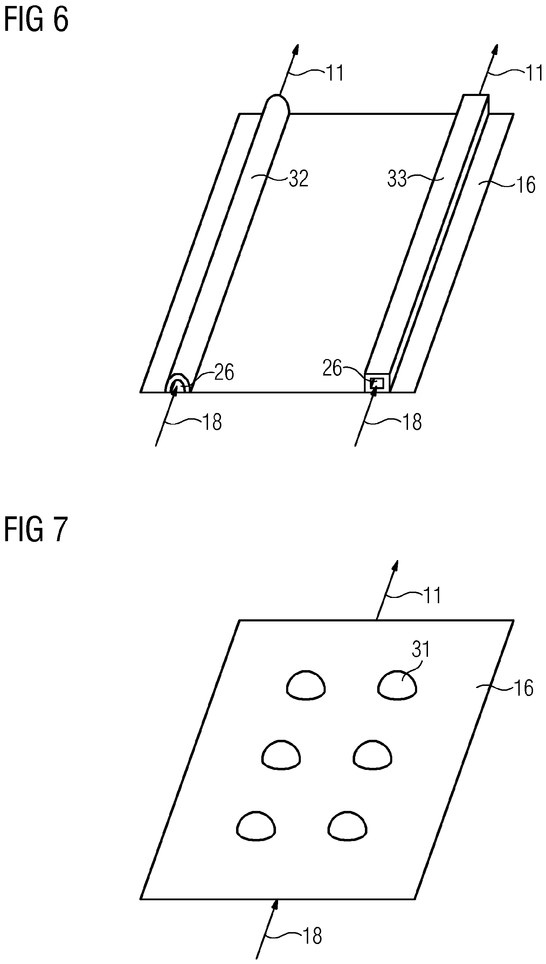

Figur 6 zeigt jeweils Flusskanäle 26, welche durch Hohlräume in zylinder- oder quaderförmigen Erhebungen 27 gebildet werden. Diese Flusskanäle 26 weisen eine sehr kurze Verweilzeit für den Elektrolyten an der Elektrode auf. Die Verweilzeit hier ist ähnlich wie eine komplett planare, im Wesentlichen glatte, Oberfläche einer Elektrode. Auch solch eine Elektrode ist denkbar, hier aber nicht gezeichnet.

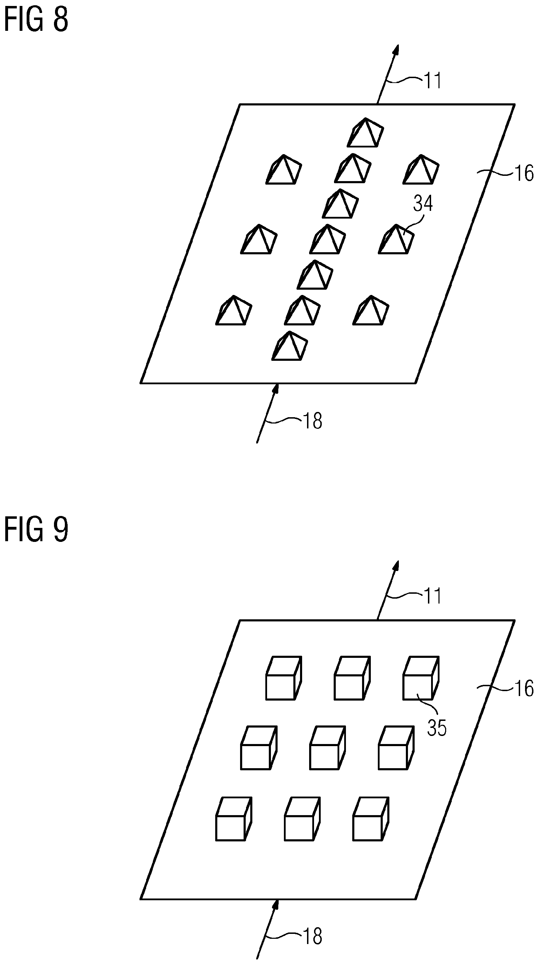

Die Anode 16 umfasst in Figur 7 halbkugelförmige Erhebungen 31, in Figur 8 pyramidenförmige Erhebungen 34 und in Figur 9 würfelförmige Erhebungen 35. Die Anzahl der Erhebungen kann unterschiedlich sein. Je mehr Erhebungen auf der Anode 16 angeordnet sind, je höher wird die Verweilzeit des Anolyts an der Anode 16.

## Patentansprüche

1. Elektrisch wiederaufladbare Redox-Flow-Batterie (1) mit einer ersten Kammer (4) und einer zweiten Kammer (5), wobei die erste Kammer (4) von der zweiten Kammer (5) mittels einer Membran (3) getrennt ist, wobei die erste Kammer (4) eine Kathode (30) umfasst und die zweite Kammer (5) eine Anode (16) umfasst, und wobei eine erste planare Oberfläche der Kathode (30) und/oder eine zweite planare Oberfläche der Anode (16) Erhebungen (27) zur Vergrößerung der Oberfläche aufweist und diese Erhebungen (27) geeignet sind, Flusskanäle (26) für einen ersten und/oder zweiten Elektrolyten der Redox-Flow Batterie (1) zu bilden, wobei die Kathode (30) und/oder die Anode (16) wenigstens ein erstes Material (25) umfassend Blei oder Bismut umfassen, wobei das erste Material (25) Blei oder Bismut mit einem Gewichtanteil von wenigstens 20% umfasst.

2. Redox-Flow-Batterie (1) nach Anspruch 1, wobei die Erhebungen (27) eine erste lange Seite und eine zweite kurze Seite (36) aufweisen.

3. Redox-Flow-Batterie (1) nach einem der vorhergehenden Ansprüche, wobei die Erhebungen (27) parallel oder mäanderförmig angeordnet sind.

4. Redox-Flow-Batterie (1) nach einem der vorhergehenden Ansprüche, wobei das erste Material (25) Blei oder Bismut mit einem Gewichtsanteil von wenigstens 40% umfasst.

5. Redox-Flow-Batterie (1) nach einem der vorhergehenden Ansprüche, wobei die Kathode (30) und/oder die Anode (16) die Membran (3) wenigstens teilweise direkt berühren.

6. Redox-Flow-Batterie (1) nach einem der vorhergehenden Ansprüche, wobei die Kathode (30) und/oder Anode (16) ein zweites Material (28) umfassen und wobei das zweite Material (28) Polymerfasern oder Kohlenstofffasern umfasst.

7. Redox-Flow-Batterie (1) nach Anspruch 6, wobei ein Gewichtsanteil des zweiten Materials wenigstens 10% beträgt.

8. Redox-Flow-Batterie (1) nach Anspruch 7, wobei das erste Material (25) als eine Schicht auf dem zweiten Material (28) angeordnet ist.

9. Redox-Flow-Batterie (1) nach einem der vorhergehenden Ansprüche, wobei die Anode (16) und/oder Kathode (30) eine Ballelektrode oder eine Stabelektrode ist.

10. Verfahren zum Betreiben einer Redox-Flow-Batterie (1) mit folgenden Schritten:
- Bereitstellen einer Redox-Flow-Batterie (1) mit einer ersten Kammer (4) und einer zweiten Kammer (5), wobei die erste Kammer (4) von der zweiten Kammer (5) mittels einer Membran (3) getrennt ist, wobei die ersten Kammer (4) eine Kathode (30) umfasst und die zweite Kammer (5) eine Anode (16) umfasst, wobei eine erste Oberfläche der Kathode (30) und/oder eine zweite Oberfläche der Anode (16) Erhebungen (27) zur Vergrößerung der Oberfläche aufweist und diese Erhebungen (27) geeignet sind, Flusskanäle (26) für einen ersten und/oder zweiten Elektrolyten der Redox-Flow Batterie (1) zu bilden, und die Kathode (30) und/oder die Anode (16) wenigstens ein erstes Material (25) umfassend Blei oder Bismut, umfassen, wobei das erste Material (25) Blei oder Bismut mit einem Gewichtanteil von wenigstens 20% umfasst,
- Führen eines ersten Elektrolyten in die erste Kammer (4) und Führen eines zweiten Elektrolyten in die zweite Kammer (5),
- Aufladen oder Entladen der Redox-Flow-Batterie (1).

11. Verfahren nach Anspruch 10, wobei als ein Reduktions-Oxidationspaar im Elektrolyten Polyoxometallat verwendet wird.

## Claims

1. Electrically rechargeable redox flow battery (1) having a first chamber (4) and a second chamber (5), wherein the first chamber (4) is separated from the second chamber (5) by means of a membrane (3), wherein the first chamber (4) comprises a cathode (30) and the second chamber (5) comprises an anode (16) and wherein a first planar surface of the cathode (30) and/or a second planar surface of the anode (16) has raised regions (27) to enlarge the surface area and these raised regions (27) are suitable for forming flow channels (26) for a first and/or second electrolyte of the redox flow battery (1), wherein the cathode (30) and/or the anode (16) comprise at least one first material (25) comprising lead or bismuth, wherein the first material (25) comprises lead or bismuth in a proportion by weight of at least 20%.

2. Redox flow battery (1) according to Claim 1, wherein the raised regions (27) have a first long side and a second short side (36).

3. Redox flow battery (1) according to either of the preceding claims, wherein the raised regions (27) are arranged parallel or in a meandering pattern.

4. Redox flow battery (1) according to any of the preceding claims, wherein the first material (25) comprises lead or bismuth in a proportion by weight of at least 40%.

5. Redox flow battery (1) according to any of the preceding claims, wherein the cathode (30) and/or the anode (16) are at least partly in direct contact with the membrane (3).

6. Redox flow battery (1) according to any of the preceding claims, wherein the cathode (30) and/or anode (16) comprise a second material (28) and wherein the second material (28) comprises polymer fibres or carbon fibres.

7. Redox flow battery (1) according to Claim 6, wherein a proportion by weight of the second material is at least 10%.

8. Redox flow battery (1) according to Claim 7, wherein the first material (25) is arranged as a layer on the second material (28).

9. Redox flow battery (1) according to any of the preceding claims, wherein the anode (16) and/or cathode (30) is a ball electrode or a rod electrode.

10. Method for operating a redox flow battery (1), comprising the following steps:
- provision of a redox flow battery (1) having a first chamber (4) and a second chamber (5), wherein the first chamber (4) is separated from the second chamber (5) by means of a membrane (3), wherein the first chamber (4) comprises a cathode (30) and the second chamber (5) comprises an anode (16), wherein a first surface of the cathode (30) and/or a second surface of the anode (16) has raised regions (27) to enlarge the surface area and these raised regions (27) are suitable for forming flow channels (26) for a first and/or second electrolyte of the redox flow battery (1), and the cathode (30) and/or the anode (16) comprise at least one first material (25) comprising lead or bismuth, wherein the first material (25) comprises lead or bismuth in a proportion by weight of at least 20%,
- passage of a first electrolyte into the first chamber (4) and passage of a second electrolyte into the second chamber (5),
- charging or discharging of the redox flow battery (1).

11. Method according to Claim 10, wherein polyoxometalate is used as a reduction-oxidation pair in the electrolyte.

## Revendications

1. Batterie (1) redox-flow rechargeable électriquement, comprenant une première chambre (4) et une deuxième chambre (5), la première chambre (4) étant séparée de la deuxième chambre (5) au moyen d'une membrane (3), la première chambre (4) entourant une cathode (30) et la deuxième chambre (5) entourant une anode (16), et dans laquelle une première surface plane de la cathode (30) et/ou une deuxième surface plane de l'anode (16) a des surélévations (27) pour augmenter la surface et ces surélévations (27) sont propres à former des canaux (26) d'écoulement d'un premier et/ou d'un deuxième électrolyte de la batterie (1) redox-flow, la cathode (30) et/ou l'anode (16) comprenant au moins un premier matériau (25), comprenant du plomb ou du bismuth, le premier matériau (25) comprenant du plomb ou du bismuth en une proportion en poids d'au moins 20%.

2. Batterie (1) redox-flow suivant la revendication 1, dans laquelle les surélévations (27) ont un premier côté long et un deuxième côté (36) court.

3. Batterie (1) redox-flow suivant l'une des revendications précédentes, dans laquelle les surélévations (27) sont disposées parallèlement ou sinueusement.

4. Batterie (1) redox-flow suivant l'une des revendications précédentes, dans laquelle le premier matériau (25) comprend du plomb ou du bismuth en une proportion en poids d'au moins 40%.

5. Batterie (1) redox-flow suivant l'une des revendications précédentes, dans laquelle la cathode (30) et/ou l'anode (16) touchent directement la membrane (3), au moins en partie.

6. Batterie (1) redox-flow suivant l'une des revendications précédentes, dans laquelle la cathode (30) et/ou l'anode (16) comprennent un deuxième matériau (28) et dans laquelle le deuxième matériau (28) comprend des fibres de polymère ou des fibres de carbone.

7. Batterie (1) redox-flow suivant la revendication 6, dans laquelle une proportion en poids du deuxième matériau est d'au moins 10%.

8. Batterie (1) redox-flow suivant la revendication 7, dans laquelle le premier matériau (25) est disposé sous la forme d'une couche sur le deuxième matériau (28).

9. Batterie (1) redox-flow suivant l'une des revendications précédentes, dans laquelle l'anode (16) et/ou la cathode (30) est une électrode boule ou une électrode barreau.

10. Procédé pour faire fonctionner une batterie (1) redox-flow, comprenant les stades suivants :
- on se procure une batterie (1) redox-flow, ayant une première chambre (4) et une deuxième chambre (5), la première chambre (4) étant séparée de la deuxième chambre (5) au moyen d'une membrane (3), la première chambre (4) entourant une cathode (30) et la deuxième chambre (5) entourant une anode (16), et dans laquelle une première surface plane de la cathode (30) et/ou une deuxième surface plane de l'anode (16) a des surélévations (27) pour augmenter la surface et ces surélévations (27) sont propres à former des canaux (26) d'écoulement d'un premier et/ou d'un deuxième électrolyte de la batterie (1) redox-flow, la cathode (30) et/ou l'anode (16) comprenant au moins un premier matériau (25), comprenant du plomb ou du bismuth, le premier matériau (25) comprenant du plomb ou du bismuth en une proportion en poids d'au moins 20%,
- on envoie un premier électrolyte dans la première chambre (4) et on envoie un deuxième électrolyte dans la deuxième chambre (5),
- on charge ou on décharge la batterie (1) redox-flow.

11. Procédé suivant la revendication 10, dans lequel on utilise un polyoxométallate comme couple de réduction-oxydation dans l'électrolyte.
